# EUROPEAN PATENT APPLICATION

(11) **EP 4 636 665 A1**
(43) Date of publication of application: **22.10.2025**
(21) Application number: 22968243.0
(22) Date of filing: 16.12.2022
(51) Int. Cl.: G06N 99/00, G01N 35/00

(54) **TEST MODULE AND METHOD FOR USING SAME**

(71) Applicant: BGI Shenzhen, Shenzhen, Guangdong 518083 (CN); BGI Shenzhen Co., Ltd, Shenzhen, Guangdong 518083 (CN)
(72) Inventor: YUN, Quanxin, Shenzhen, Guangdong 518083 (CN); YU, Lei, Shenzhen, Guangdong 518083 (CN); ZHANG, Yuning, Shenzhen, Guangdong 518083 (CN); LI, Yuxiang, Shenzhen, Guangdong 518083 (CN); DONG, Yuliang, Shenzhen, Guangdong 518083 (CN)
(74) Representative: Nederlandsch Octrooibureau
(86) International application number: PCT/CN2022/139622
(87) International publication number: WO 2024/124537

(57) **Abstract**

A detection module for performing a biochemical analysis on a target sample and a method of using the same are provided. The detection module includes: a fluid tank (100) defining a fluid channel (101), where the fluid channel allows a carrier reagent carrying the target sample to be detected to flow through; and at least two chip carriers (210, 220) arranged on different sides of the fluid tank (100), where each chip carrier (210, 220) carries a sensor chip (310, 320), the sensor chips (310, 320) carried on the at least two chip carriers (210, 220) face the same fluid channel (101) of the fluid tank (100) so that the target sample in the carrier reagent in the fluid channel (101) is loaded onto the sensor chips (310, 320), and each sensor chip (310, 320) is configured to measure a characteristic related to the target sample loaded onto the sensor chip so as to generate characteristic data.

## Description

### TECHNICAL FIELD

Embodiments of the present disclosure generally relate to a field of biochemical technology, and in particular to a detection module capable of improving a detection throughput in a biochemical analysis, and a method of using a detection module.

### BACKGROUND

In the field of biochemical technology, it is usually needed to use various forms of detection systems to perform multi-purpose detection on chemical or biological samples, such as component analysis or gene sequencing with the help of chips. In these detection systems, it is generally needed to improve a detection throughput of the detection system to help optimize an average cost of detection.

A parallel detection ability or a throughput of a molecular detection system is limited by an array architecture of a detection chip module. Due to limitations in characteristics of circuit technology and capabilities of chip manufacturing technology, a detection array architecture of a single chip module in a two-dimensional plane is limited, and a throughout of a single module is also limited. If the detection array architecture and the detection throughout are expanded by simply increasing a chip area in the two-dimensional plane, an amount of reagents used may also increase by at least the same proportion, which is not beneficial for balancing the throughout and a unit cost of detection. Moreover, simply increasing an in-plane channel density of a single chip poses significant technical challenges and has physical limitations. Therefore, increasing the scale or density of in-plane detection channels without significantly increasing the amount of reagents used is a meaningful and challenging task for optimizing the cost of molecular detection.

### SUMMARY

The present disclosure is proposed to overcome at least one of the above-mentioned and other problems and defects in the prior art.

In an aspect of the present disclosure, the embodiments provide a detection module for performing a biochemical analysis on a target sample, including: a fluid tank defining a fluid channel, where the fluid channel allows a carrier reagent carrying a target sample to be detected to flow through; and at least two chip carriers arranged on different sides of the fluid tank to be orientated in different directions, where each chip carrier carries a sensor chip, the sensor chips carried on the at least two chip carriers face the same fluid channel of the fluid tank so that the target sample in the carrier reagent in the fluid channel is loaded onto the sensor chips, and each sensor chip is configured to measure a characteristic related to the target sample loaded onto the sensor chip so as to generate characteristic data.

In some embodiments, the fluid tank further includes an inlet in communication with the fluid channel and an outlet in communication with the fluid channel, so as to allow the carrier reagent to be injected into the fluid channel through the inlet, flow through the fluid channel, and be discharged through the outlet.

In some embodiments, at least one sensor chip is formed with an array of feature sites, and each feature site is configured to allow the target sample to be loaded or attached at the feature site.

In some embodiments, each chip carrier is mounted with one or more sensor chips.

In some embodiments, at least one sensor chip includes an array of sensor elements configured to sense the characteristic related to the target sample loaded onto the at least one sensor chip.

In some embodiments, each sensor element includes: a photoelectric sensor configured to sense a fluorescent signal to generate corresponding characteristic data, where the fluorescent signal is generated in response to a loading and/or biochemical reaction of the target sample on the corresponding sensor chip; or an electrical sensor configured to sense an electrical signal to generate corresponding characteristic data, where the electrical signal is generated in response to a loading and/or biochemical reaction of the target sample on the corresponding sensor chip.

In some embodiments, the at least two chip carriers include: a first chip carrier configured to be sealingly assembled to a side of the fluid tank; and a second chip carrier configured to be sealingly assembled to an opposite side of the fluid tank, so that the first chip carrier, the fluid tank and the second chip carrier are stacked in this order; and the sensor chips include: a first sensor chip mounted on the first chip carrier to be exposed to the carrier reagent in the fluid channel so that the target sample in the carrier reagent is loaded onto the first sensor chip, where the first sensor chip is configured to measure a characteristic related to the target sample loaded onto the first sensor chip so as to generate first characteristic data; and a second sensor chip mounted on the second chip carrier to be exposed to the carrier reagent in the same fluid channel so that the target sample in the carrier reagent is loaded onto the second sensor chip, where the second sensor chip is configured to measure a characteristic related to the target sample loaded onto the second sensor chip so as to generate second characteristic data.

In some embodiments, the first sensor chip and the second sensor chip are located in the same fluid channel, with facing or being offset from each other and being spaced apart in a stacking direction.

In some embodiments, the detection module is a component of a detection system including a data processor, and the detection module further includes: a first signal connector on the first chip carrier or the first sensor chip, where the first characteristic data is transmitted to the data processor via the first signal connector; and a second signal connector on the second chip carrier or the second sensor chip, where the second characteristic data is transmitted to the data processor via the second signal connector.

In some embodiments, at least one of the first signal connector or the second signal connector is configured to be electrically connected to the data processor by wire or wirelessly.

In some embodiments, the first signal connector is provided on a side surface of the first chip carrier or on a surface of the first chip carrier facing away from the fluid tank; and/or the second signal connector is provided on a side surface of the second chip carrier or on a surface of the second chip carrier facing away from the fluid tank.

In some embodiments, the first signal connector is provided on the first chip carrier; the second signal connector is provided on the second chip carrier; and the detection module further includes a third signal connector provided on the first chip carrier and electrically connected to the first signal connector, the third signal connector is configured to mate with the second signal connector so as to allow the second characteristic data to be transmitted to the data processor via the second signal connector, the third signal connector and the first signal connector in sequence.

In some embodiments, the first signal connector is provided on a side surface of the first chip carrier, the second signal connector is provided on a surface of the second chip carrier facing the fluid tank, and the third signal connector is provided on a surface of the first chip carrier facing the fluid tank so as to mate with the second signal connector.

In some embodiments, at least one of the first signal connector, the second signal connector or the third signal connector includes a plug connector, a socket connector, a conductive probe, a conductive contact sheet or a conductive contact point.

In some embodiments, at least one of the first chip carrier or the second chip carrier includes: a circuit board electrically connected to a corresponding sensor chip mounted thereon, or a substrate having wiring electrically connected to a corresponding sensor chip mounted thereon.

In another aspect of the present disclosure, the embodiments further provide a method of performing a biochemical analysis on a target sample using a detection system including the detection module described in any embodiment of the present disclosure, including: introducing a carrier reagent carrying a target sample into the fluid channel; allowing the target sample in the carrier reagent introduced into the fluid channel to be loaded onto sensor chips of the at least two chip carriers, where the sensor chips of the at least two chip carriers are exposed to the same fluid channel; and measuring, by using the sensor chips, a characteristic related to the target sample loaded onto the sensor chips to generate characteristic data, in response to a loading and/or biochemical reaction of the target sample.

In some embodiments, the biochemical analysis includes a sequence detection of the target sample.

In some embodiments, the sequence detection includes gene sequencing or protein sequencing.

In some embodiments, the characteristic data is generated by a sensor element of the sensor chip sensing a fluorescent signal or an electrical signal, and the fluorescent signal or the electrical signal is generated in response to a loading and/or biochemical reaction of the target sample on the sensor element.

In some embodiments, the method further includes: transmitting the characteristic data to a data processor of the detection system via a signal connector on the chip carrier or the sensor chip; and analyzing and determining a biochemical characteristic of the detected target sample by the data processor based on the characteristic data.

With the following descriptions of the present disclosure with reference to the accompanying drawings, other objectives and advantages of the present disclosure will be obvious and the present disclosure may be understood comprehensively.

### BRIEF DESCRIPTION OF THE DRAWINGS

The features and advantages of the present disclosure will be more clearly understood with reference to the accompanying drawings, and the accompanying drawings are illustrative and should not be construed as limiting the present disclosure in any way. In the accompanying drawings:
FIG. 1 schematically shows a cross-sectional view of a structure of a detection module according to an exemplary embodiment of the present disclosure;
FIG. 2 schematically shows another cross-sectional view of a structure of a detection module according to an exemplary embodiment of the present disclosure;
FIG. 3 schematically shows of a cross-sectional view of a structure of a detection module according to another exemplary embodiment of the present disclosure;
FIG. 4 schematically shows of a cross-sectional view of a structure of a detection module according to still another exemplary embodiment of the present disclosure;
FIG. 5 schematically shows a cross-sectional view of a structure of a detection module according to still another exemplary embodiment of the present disclosure;
FIG. 6 schematically shows a cross-sectional view of a structure of a detection module according to yet another exemplary embodiment of the present disclosure;
FIG. 7 schematically shows a cross-sectional view of a structure of a detection module according to yet another exemplary embodiment of the present disclosure; and
FIG. 8 schematically shows a flowchart of a method of performing a biochemical analysis using a detection module according to an exemplary embodiment of the present disclosure.

### DETAILED DESCRIPTION OF EMBODIMENTS

Technical solutions in embodiments of the present disclosure will be clearly and completely described below with reference to the accompanying drawings in the embodiments of the present disclosure. Obviously, the described embodiments are merely some rather than all of the embodiments of the present disclosure. Based on the embodiments of the present disclosure, all additional embodiments obtained by those ordinary skilled in the art without carrying out inventive effort fall within the scope of protection of the present disclosure.

In addition, in the following detailed description, for the sake of explanation, many specific details are set forth to provide comprehensive understanding of the embodiments of the present disclosure. Obviously, however, one or more embodiments may also be implemented without these specific details. In other cases, well-known structures and devices are illustrated to simplify the accompanying drawings.

According to an exemplary embodiment of the present disclosure, a detection module for a biochemical analysis is provided, which includes detection chips or sensor chips arranged three-dimensionally at different latitudes (for example, stacked directly or offset, or arranged face-to-face) in the same detection channel, so that a detection throughout or a parallel detection ability may be effectively improved, that is, it is possible to increase the scale or density of in-plane detection channels without significantly increasing the amount of reagents used, thereby achieving a better cost optimization.

The detection module provided according to the exemplary embodiments of the present disclosure, for example, as a component of a detection system, may be applied to a chemical or biological molecular detection including but not limited to gene sequencing, targeted gene diagnosis, methylation research, mutation identification (SNP detection), microfluidics technology, etc. As an example, the detection module provided may be applied to gene sequencing characterized by single-molecule sequencing, in which PCR amplification is not required and individual sequencing of each biological molecule (such as DNA molecule) may be achieved.

The detection module provided according to the exemplary embodiments of the present disclosure mainly includes a fluid tank and at least two chip carriers arranged three-dimensionally (rather than planar) relative to the fluid tank (for example, on different sides of the fluid tank), and each chip carrier carries a detection or sensor chip for detecting a target sample.

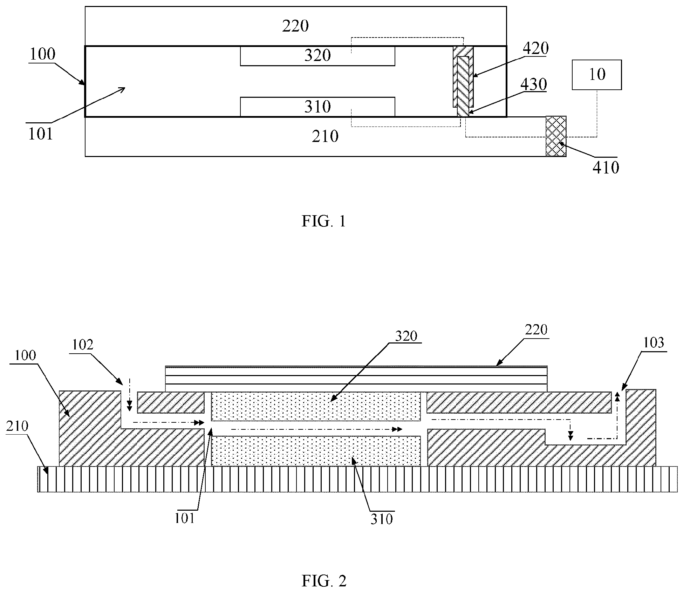

FIG. 1 to FIG. 7 schematically show main structures of detection modules provided according to several exemplary embodiments of the present disclosure. As shown, the detection module provided mainly includes a fluid tank 100, a first chip carrier 210, a second chip carrier 220, a first sensor chip 310 mounted on the first chip carrier 210, and a second sensor chip 320 mounted on the second chip carrier 220. However, the present disclosure is not limited to this, and in other embodiments, the detection module may include more chip carriers.

As shown in FIG. 1 to FIG. 7, the fluid tank 100 defines a fluid channel 101, and a carrier reagent carrying a target sample to be detected is allowed to flow through the fluid channel 101. Exemplarily, as shown in FIG. 2, the fluid tank 100 further includes an inlet 102 in communication with the fluid channel 101 and an outlet 103 in communication with the fluid channel 101, so as to allow the carrier reagent to be injected into the fluid channel 101 through the inlet 102, flow through the fluid channel 101, and be discharged through the outlet 103. For example, the carrier reagent may be driven to flow through the fluid channel by means of a micro-pump, a voltage-driven electrophoresis technology, or the like.

As an example, the fluid tank 100 may also be referred to as a fluid housing or container, and may include a microfluidic chip or a portion thereof, such as a flow channel or a reaction chamber used in microfluidic chip technology, to serve as the fluid channel 101. Exemplarily, the target sample may include a chemical sample or a biological sample, such as an inorganic molecule, a nucleic acid (DNA or RNA) molecule, a protein, a cell, a peptide or a metabolite, etc. In addition to containing the target sample, the carrier reagent may further contain a non-target sample molecule, such as a reaction reagent, etc.

In an exemplary embodiment of the present disclosure, unlike a conventional planar detection module (for example, in which detection chips are only provided on the same surface of a single planar carrier), the fluid tank and the at least two chip carriers are arranged (for example, stacked) in a multi-dimensional manner, where the at least two chip carriers are oriented in different directions, or arranged on different sides or surfaces of the fluid tank, or positioned in different planes, so that the detection or sensor chips carried thereon face the same fluid channel of the fluid tank, or are located or exposed in the same fluid channel. Accordingly, the target sample in the carrier reagent located in the fluid channel may be loaded onto the sensor chips, and each sensor chip is configured to measure a characteristic related to the target sample loaded thereon to generate characteristic data, thereby improving the detection throughput. As an example, each chip carrier may be mounted with one or more sensor chips that are, for example, located in the same mounting plane, so as to further improve the detection throughput.

It may be understood that herein, "the detection or sensor chips carried thereon face the same fluid channel of the fluid tank, or are located or exposed in the same fluid channel" means that detection surfaces or regions (such as the surfaces provided with sensor elements to be described below) of the detection or sensor chips used to detect the target sample face the same fluid channel of the fluid tank, or are located or exposed in the same fluid channel, so that the detection or sensor chips carried on the at least two chip carriers arranged three-dimensionally may be used to detect the target sample in the same fluid channel of the fluid tank.

In some embodiments, at least one sensor chip may be formed with an array of feature sites, and each feature site is configured to allow the target sample to be loaded or attached (e.g., captured) at the feature site. As an example, only one target sample, such as a chemical or biological molecule, is loaded at each feature site. As an example, the sensor chip may be formed with nano-pores, such as nano-pores having a diameter exactly large enough to pass a target sample (e.g., nucleotide) molecule. By way of example but not limitation, the "feature site" mentioned herein includes but is not limited to a micro-pore, a micro-cavity, a groove, a micro-well, a protrusion, a micro-bead, or a modified region (such as having nano-coating), etc., and is typically set to have dimensions such as length, width or possible depth or height, etc. suitable for attaching the target sample.

In some embodiments, at least one sensor chip may include an array of sensor elements for sensing characteristics related to the loaded target sample. The sensor elements may be sensors in various forms, for example, a photoelectric sensor or an electrical sensor, depending on the specific application. As an example, the sensor element may be provided at or near a position where the target sample is loaded, for example, on a bottom or sidewall of the micro-pore.

Exemplarily, in a fluorescent sequencing application, four nucleotides labeled with different fluorophores may be sequentially loaded onto DNA primers located on a chip (e.g., located in the above-mentioned micro-pores) to perform base extension, then fluorescent signals of the extended primers are detected by fluorescent imaging technology to identify bases at corresponding positions on a template to be detected, and then fluorescent groups are removed, and the above-mentioned sequencing cyclic process is repeatedly performed in sequence to achieve a determination of DNA sequence. During this process, it is possible to record intensity changes of different fluorescence in real time using a photoelectric sensor or a microscope. The photoelectric sensor, such as a CCD sensor or a CMOS sensor, is used to sense a fluorescent signal generated in response to a loading and/or biochemical reaction of the target sample on the corresponding sensor chip, and convert the fluorescent signal into an electrical signal to generate corresponding characteristic data.

Exemplarily, in nano-pore sequencing, it is possible to drive individual DNA molecules through the nano-pore one by one to achieve sequencing by using electrophoresis technology integrated with DNA unwinding reaction. The nano-pore has a very small diameter that only allows a single-stranded nucleic acid polymer to pass through, while individual ATCG bases are different in terms of charge property and physical size. Therefore, the type of base that passes through may be detected by a difference in electrical signals, thereby achieving sequencing. For example, a nano-pore may be formed or provided in a membrane containing a pair of electrodes, and a DNA helicase may be bound to the target sample to be detected. When the target sample to be detected is captured by the nano-pore, the target sample to be detected may start a DNA unwinding reaction with the assistance of an electric field force, and the unwind single strands of DNA may pass through the nano-pore sequentially. Solutions or reagents containing ions are provided on both sides of the membrane, and an electric current may be generated in the nano-pore when a voltage is applied. When a single strand of DNA passes through the nano-pore, the nano-pore may be blocked to cause a current change. A base sequence of the corresponding single strand of DNA may be inferred according to the change in the blocked current. Therefore, the electrical sensor may sense the current signal generated in response to the loading and/or biochemical reaction of the target sample on the corresponding sensor chip so as to generate corresponding characteristic data, such as characteristic sequence current of each DNA molecule. As an example, the electrical sensor employed may include a MOSFET sensor, a CMOS charge integration sensor, or the like.

The structures and arrangements of the detection modules provided according to various exemplary embodiments of the present disclosure will be described below with reference to FIG. 1 to FIG. 7. In some embodiments, the first chip carrier 210 and the second chip carrier 220 are suitable for being sealingly assembled to different sides of the fluid tank 100, so that the first sensor chip 310 and the second sensor chip 320 carried thereon face the same fluid channel 101 of the fluid tank 100 or are located or exposed in the same fluid channel 101. As an example, the chip carriers (the first chip carrier 210 and the second chip carrier 220 shown) may be assembled to the fluid tank 100 using fasteners (not shown) such as bolts, adhesives, etc. In addition, a sealing member (such as a sealing ring, not shown) may be provided between each chip carrier and the fluid tank to provide an airtight seal and a liquid seal between the chip carrier and the fluid tank to prevent gas and fluid from passing through or leaking.

In the illustrated exemplary embodiments, the first chip carrier 210 is sealingly assembled to a first side (lower side in the figure) of the fluid tank 100, and the second chip carrier 220 is sealingly assembled to an opposite second side (upper side in the figure) of the fluid tank 100. Therefore, the first chip carrier 210 carrying the first sensor chip 310, the fluid tank 100, and the second chip carrier 220 carrying the second sensor chip 320 are sequentially stacked (e.g., in an up-down direction in the figure) to form a stacked structure, such as a sandwich structure. It may be understood that the stacked or three-dimensionally arranged structures of the detection module may be fastened together using additional fasteners (such as bolts or clamps, etc., not shown). In an embodiment not shown, if an installation space allows, the first, second or additional chip carrier may also be arranged on a side surface of the fluid tank.

As shown in FIG. 1 to FIG. 7, the first sensor chip 310 is mounted (for example, by adhesive bonding, metal wire bonding, flip-chip packaging, etc.) on a surface of the first chip carrier 210 facing the fluid tank 100 to be exposed to the carrier reagent in the fluid channel 101, so that the target sample in the carrier reagent (not shown) introduced into the fluid channel 101 may be loaded onto the first sensor chip 310. The first sensor chip 310 is configured to measure a characteristic related to the target sample loaded thereon to generate first characteristic data. Similarly, the second sensor chip 320 is mounted (e.g., by adhesive bonding, metal wire bonding, flip-chip packaging, etc.) on a surface of the second chip carrier 220 facing the fluid tank 100 to be exposed to the carrier reagent in the fluid channel 101, so that the target sample in the carrier reagent introduced into the fluid channel 101 may be loaded onto the second sensor chip 320. The second sensor chip 320 is configured to measure a characteristic related to the target sample loaded thereon to generate second characteristic data.

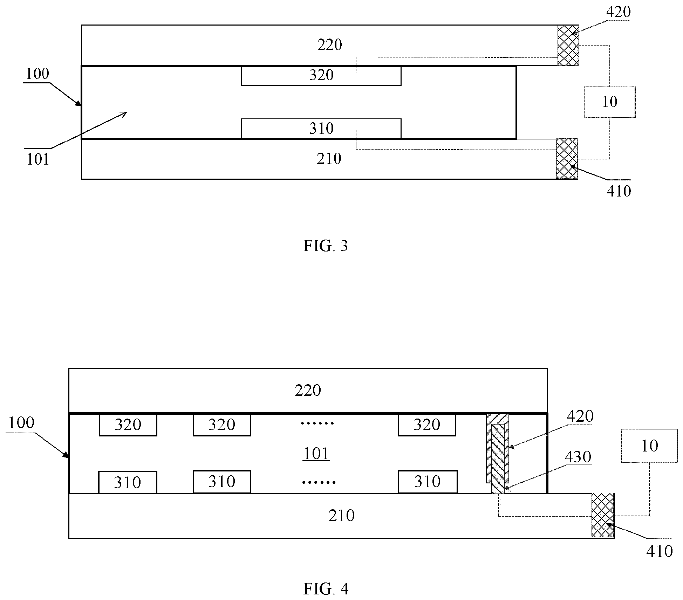

Each chip carrier may be mounted with one or more sensor chips, which may be located, for example, in the same or different mounting planes. As shown in FIG. 1 to FIG. 3 and FIG. 6, the first chip carrier 210 is mounted with one first sensor chip 310, and the second chip carrier 220 is mounted with one second sensor chip 320. In the embodiments shown in FIG. 4 to FIG. 5 and FIG. 7, the first chip carrier 210 is mounted with a plurality of first sensor chips 310, and the second chip carrier 220 is mounted with a plurality of second sensor chips 320. It may be understood that the present disclosure is not limited to this, and various sensor chips mounted on various chip carriers may be the same or different in type, size, quantity, arrangement, spacing, sensor elements, etc., and may be designed according to specific applications. When the first chip carrier 210 and the second chip carrier 220 are stacked face-to-face to be assembled on opposite sides of the fluid tank 100, each of the first sensor chip 310 and the second sensor chip 320 mounted thereon may face or be located in the same fluid channel 101, with facing each other or offset from each other and spaced apart in a stacking direction.

In some exemplary embodiments, the detection module may further include or be provided with a signal connector for transmitting the obtained characteristic data to a system host or data processor (such as central processing unit or microprocessor) of the detection system, so that the system host or data processor may analyze and determine a biochemical characteristic of the detected target sample, for example, perform a sample composition analysis or gene sequence analysis, based on the characteristic data.

Exemplarily, the signal connector of the detection module may be electrically connected to the system host or data processor by wire or wirelessly. For example, the signal connector may include a signal transmitter or transceiver to wirelessly transmit the characteristic data to the system host or data processor, or include an electrical connector to be electrically connected to a mating connector of the system host or data processor so as to read the characteristic data generated by the detection module. In other examples, it is also possible to supply power to the sensor chip or the chip carrier or apply a control signal for controlling a detection operation, through the signal connector or an additional connector. In addition, in other embodiments, various operations of the detection module, such as gene sequencing, characteristic measurement and control of the membrane, flow control of the carrier reagent entering and leaving the fluid tank, unblocking of blocked nano-pore, checking for short circuits and other faults, reading data, opening and closing channels, self-calibration or user testing, etc., may be executed and controlled by an external device or controller such as the system host or data processor via the signal connector.

The signal connector may be arranged on the chip carrier and electrically connected to the sensor chip, or may be directly arranged on the sensor chip to establish a signal or electrical connection between the sensor chip and the external system host or data processor, thereby enabling data transmission or reading. In the embodiments shown in FIG. 1 and FIG. 2 to FIG. 7, the detection module further includes a first signal connector 410 and a second signal connector 420. The first signal connector 410 is arranged on the first chip carrier 210 to allow the first characteristic data generated by the first sensor chip 310 to be directly or indirectly transmitted to the system host or data processor 10 of the detection system via the first signal connector 410. The second signal connector 420 is arranged on the second chip carrier 210 to allow the second characteristic data generated by the second sensor chip 320 to be directly or indirectly transmitted to the system host or data processor 10 via the second signal connector 420. It may be understood that the present disclosure is not limited to this, and an appropriate number of signal connectors may be provided according to specific applications or requirements. For example, each chip carrier may be provided with one or more signal connectors, or one signal connector may be provided for one or more sensor chips, or the sensor chips and the signal connectors have a one-to-one correspondence.

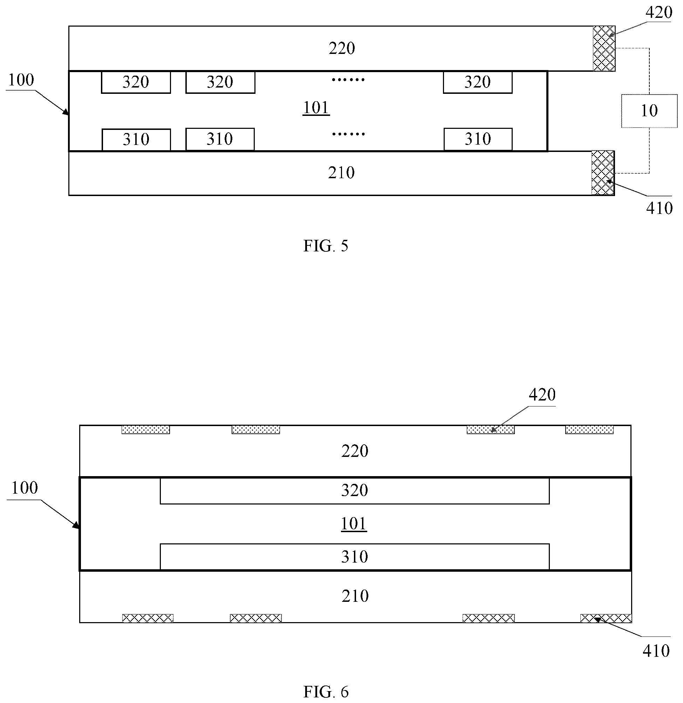

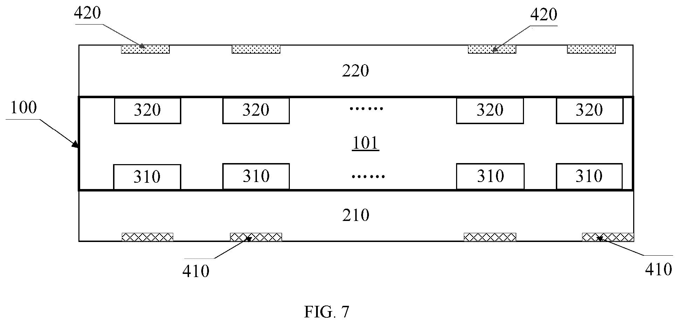

Exemplarily, the first signal connector 410 may be arranged on a side surface of the first chip carrier 210 (as shown in FIG. 3 and FIG. 5), or on a surface of the first chip carrier 210 facing away from the fluid tank 100 (as shown in FIG. 6 and FIG. 7). Similarly, the second signal connector 420 may be arranged on a side surface of the second chip carrier 220 (as shown in FIG. 3 and FIG. 5), or on a surface of the second chip carrier 220 facing away from the fluid tank 100 (as shown in FIG. 6 and FIG. 7). However, it may be understood that the present disclosure is not limited to this, and the signal connectors may be appropriately arranged according to their specific structure, specific form of electrical communication with the external device such as the system host or data processor, installation space requirements, etc.

In the embodiments shown in FIG. 3 and FIG. 5 to FIG. 7, the first chip carrier 210 and the second chip carrier 220 communicate with the system host or data processor 10 respectively through the first signal connector 410 and the second signal connector 420. In the embodiments shown in FIG. 1 and FIG. 4, the detection module may further include a third signal connector 430, which is provided on the first chip carrier 210 and electrically connected to the first signal connector 410. The third signal connector 430 is suitable for mating with the second signal connector 420 on the second chip carrier 220 to allow the second characteristic data generated by the second sensor chip 320 to be transmitted or read to the system host or data processor 10 via the second signal connector 420, the third signal connector 430 and the first signal connector 410 in sequence, while the first characteristic data generated by the first sensor chip 310 is transmitted or read to the system host or data processor 10 via the first signal connector 410. By contrast, the first characteristic data generated by the first sensor chip may also be transmitted or read to the system host or data processor via the signal connector provided on the second chip carrier or the second sensor chip. For example, as shown in FIG. 1 and FIG. 4, the second signal connector 420 is arranged on the surface of the second chip carrier 220 facing the fluid tank 100, and the third signal connector 430 is arranged on the surface of the first chip carrier 210 facing the fluid tank 100 to mate with the second signal connector 420. However, the present disclosure is not limited to this, and the position of the mating signal connector may be appropriately determined according to specific applications.

The specific structure or form of the signal connector for establishing electrical connection or data communication between the chip carrier or the sensor chip mounted thereon and an external device such as the system host or data processor is not limited, and any appropriate connector may be used, including but not limited to plug connector (such as pin connector, etc.), socket connector, metal probe (such as spring probe), conductive contact sheet or conductive contact point (such as gold finger or metal contact point, etc.) or the like. These signal connectors may be connectors of the chip carrier or the sensor chip, or may be separately provided connectors. It may be understood that optionally, wiring (such as conductive wire) for establishing an electrical connection between the sensor element and the signal connector, a circuit for processing (such as filtering, noise-reducing, amplifying, etc.) the sensed optical or electrical signal, a memory for temporarily storing the generated characteristic data, etc. may be further formed in the chip carrier and/or the sensor chip.

As an example, the chip carrier may include or be a circuit board electrically connected to the corresponding sensor chip mounted thereon, or include or be a substrate having wiring electrically connected to the corresponding sensor chip mounted thereon, such as a semiconductor (e.g., silicon) substrate, a glass substrate, a ceramic substrate, etc., which are not specifically limited here.

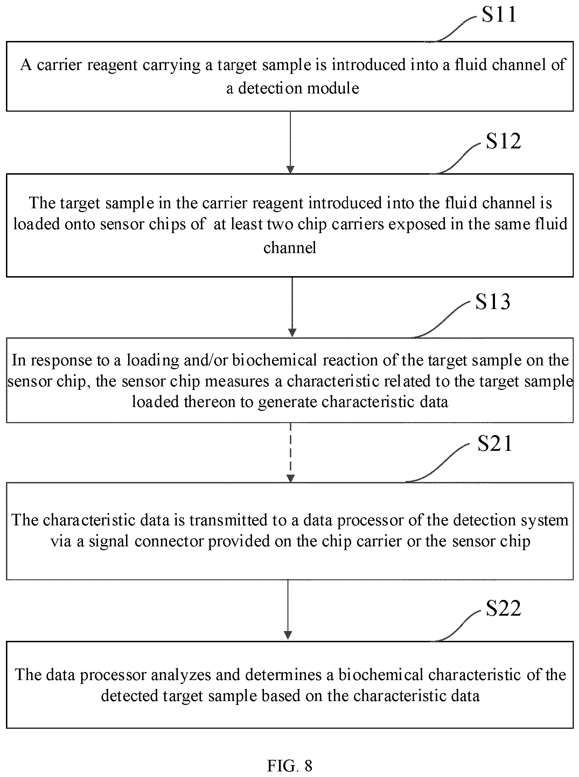

In addition, as shown in FIG. 8, the exemplary embodiments of the present disclosure further provide a method of performing a biochemical analysis on a target sample using a detection system including the detection module disclosed. The biochemical analysis performed includes but is not limited to a sequence detection of the target sample, such as gene sequencing or protein sequencing, and may further include various non-sequence detections of the target sample, i.e., biological/chemical detection or analysis other than sequencing performed using chips.

Referring to FIG. 1 to FIG. 8, the method mainly includes the following steps.

In step S11, a carrier reagent carrying a target sample is introduced into the fluid channel 101 of the fluid tank 100 (e.g., via the inlet 102).

In step S12, the target sample in the carrier reagent introduced into the fluid channel 101 is loaded onto the sensor chips 310 and 320 of the at least two chip carriers 210 and 220 exposed in the same fluid channel 101. For example, the target sample may be loaded to a detection site or region such as a nano-pore. For example, in nano-pore sequencing technology, the target sample (such as DNA or RNA molecule) may be loaded into the nano-pore of the sensor chip by applying a voltage.

In step S13, in response to a loading and/or biochemical reaction of the target sample on the sensor chip, the sensor chip measures a characteristic related to the target sample loaded thereon to generate characteristic data. Exemplarily, the characteristic data may be generated by the sensor element of the sensor chip sensing a fluorescence signal or a current signal, where the fluorescence signal or the current signal is generated in response to the loading and/or biochemical reaction of the target sample on the sensor element.

After the detection is completed, a waste liquid in the fluid channel 101 may be discharged via the outlet 103 of the fluid tank 100, and then other target samples may be introduced, loaded and detected.

As shown in FIG. 8, the method may further include the following steps.

In step S21, the characteristic data generated by the sensor chip is transmitted to the system host or data processor of the detection system, for example, via a signal connector provided on the chip carrier or the sensor chip.

In step S22, the system host or data processor processes and analyzes the characteristic data to determine a biochemical characteristic of the detected target sample, such as performing a gene sequence analysis.

Herein, unless otherwise specifically stated or as is apparent from the discussion, terms such as "processing" or "computing" or "calculating" or "determining" refer to actions and processes of a computer system or similar electronic computing device representing operations or steps as data of physical electronic quantities in registers and memories of the computer system and converting the data into other data similarly represented as physical quantities in the memories or registers or other information storage, transfer or display devices of the computer system.

The illustrative embodiments have been described above with reference to actions and symbolic representations of operations or steps (for example, in the form of flowcharts), and the operations or steps may be executed as program modules or functional processes, which include programs, programming, objects, components, data structures, etc., and which may execute specific tasks or execute specific abstract data types and may be executed using existing hardware.

Those skilled in the art may understand that the present disclosure includes devices related to performing one or more of the functions of the methods, steps, operations or modules described in the present disclosure. These devices may be specially designed and manufactured for the required purposes, or may include known devices in general-purpose computers. These devices have computer programs stored therein, which are selectively activated or reconfigured. Such computer programs may be stored in a device (e.g., computer) readable medium or in any type of medium suitable for storing electronic instructions and separately coupled to a bus. The computer readable medium includes but is not limited to any type of disk (including floppy disk, hard disk, optical disk, CD-ROM, and magneto-optical disk), ROM (Read-Only Memory), RAM (Random Access Memory), EPROM (Erasable Programmable Read-Only Memory), EEPROM (Electrically Erasable Programmable Read-Only Memory), flash memory, magnetic card or optical card. That is, the readable medium includes any medium that may store or transmit information in a form that may be read by a device (e.g., computer).

Terms are used herein for the purpose of describing specific embodiments only and are not intended to limit the present disclosure. The terms "including", "containing", etc. used herein indicate the presence of the feature, step, operation and/or component, but do not exclude the presence or addition of one or more other features, steps, operations or components.

Herein, although terms such as "first", "second", etc. are used to describe various elements, components and/or parts, these elements, components or parts are obviously not limited by these terms, and these terms are merely used to distinguish one element, component or part from another element, component or part. Therefore, within the technical spirit of the present disclosure, for example, a first device, a first component or a first part may also be a second device, a second component or a second part.

The embodiments of the present disclosure have been shown and described. However, it may be appreciated by those skilled in the art that changes may be made to these embodiments without departing from the principles and spirit of the present disclosure, and the scope of the present disclosure is defined by the appended claims and their equivalents.

## Claims

1. A detection module for performing a biochemical analysis on a target sample, comprising:
a fluid tank (100) defining a fluid channel (101), wherein the fluid channel allows a carrier reagent carrying the target sample to be detected to flow through; and
at least two chip carriers (210, 220) arranged on different sides of the fluid tank to be orientated in different directions, wherein each chip carrier carries a sensor chip (310, 320), the sensor chips carried on the at least two chip carriers face the same fluid channel of the fluid tank, so that the target sample in the carrier reagent in the fluid channel is loaded onto the sensor chips,
wherein each sensor chip is configured to measure a characteristic related to the target sample loaded onto the sensor chip so as to generate characteristic data.

2. The detection module according to claim 1, wherein the fluid tank further comprises an inlet (102) in communication with the fluid channel and an outlet (103) in communication with the fluid channel, so as to allow the carrier reagent to be injected into the fluid channel through the inlet, flow through the fluid channel, and be discharged through the outlet.

3. The detection module according to claim 1, wherein at least one sensor chip is formed with an array of feature sites, and each feature site is configured to allow the target sample to be loaded or attached at the feature site.

4. The detection module according to claim 1, wherein each chip carrier is mounted with one or more sensor chips.

5. The detection module according to claim 1, wherein at least one sensor chip comprises an array of sensor elements configured to sense the characteristic related to the target sample loaded onto the at least one sensor chip.

6. The detection module according to claim 5, wherein each sensor element comprises:
a photoelectric sensor configured to sense a fluorescent signal to generate corresponding characteristic data, wherein the fluorescent signal is generated in response to a loading and/or biochemical reaction of the target sample on the corresponding sensor chip; or
an electrical sensor configured to sense an electrical signal to generate corresponding characteristic data, wherein the electrical signal is generated in response to a loading and/or biochemical reaction of the target sample on the corresponding sensor chip.

7. The detection module according to any one of claims 1 to 6, wherein the at least two chip carriers comprise:
a first chip carrier (210) configured to be sealingly assembled to a side of the fluid tank; and
a second chip carrier (220) configured to be sealingly assembled to an opposite side of the fluid tank, so that the first chip carrier, the fluid tank and the second chip carrier are stacked in this order; and
wherein the sensor chips comprise:
a first sensor chip (310) mounted on the first chip carrier to be exposed to the carrier reagent in the fluid channel so that the target sample in the carrier reagent is loaded onto the first sensor chip, wherein the first sensor chip is configured to measure a characteristic related to the target sample loaded onto the first sensor chip so as to generate first characteristic data; and
a second sensor chip (320) mounted on the second chip carrier to be exposed to the carrier reagent in the same fluid channel so that the target sample in the carrier reagent is loaded onto the second sensor chip, wherein the second sensor chip is configured to measure a characteristic related to the target sample loaded onto the second sensor chip so as to generate second characteristic data.

8. The detection module according to claim 7, wherein the first sensor chip and the second sensor chip are located in the same fluid channel, with facing or being offset from each other and being spaced apart in a stacking direction.

9. The detection module according to claim 7, wherein the detection module is a component of a detection system comprising a data processor (10), and the detection module further comprises:
a first signal connector (410) on the first chip carrier (210) or the first sensor chip, wherein the first characteristic data is transmitted to the data processor via the first signal connector; and
a second signal connector (420) on the second chip carrier (210) or the second sensor chip, wherein the second characteristic data is transmitted to the data processor via the second signal connector.

10. The detection module according to claim 9, wherein at least one of the first signal connector or the second signal connector is configured to be electrically connected to the data processor by wire or wirelessly.

11. The detection module according to claim 9, wherein the first signal connector is provided on a side surface of the first chip carrier or on a surface of the first chip carrier facing away from the fluid tank; and/or
wherein the second signal connector is provided on a side surface of the second chip carrier or on a surface of the second chip carrier facing away from the fluid tank.

12. The detection module according to claim 9, wherein the first signal connector is provided on the first chip carrier;
wherein the second signal connector is provided on the second chip carrier; and
wherein the detection module further comprises a third signal connector (430) provided on the first chip carrier and electrically connected to the first signal connector, the third signal connector is configured to mate with the second signal connector so as to allow the second characteristic data to be transmitted to the data processor via the second signal connector, the third signal connector and the first signal connector in sequence.

13. The detection module according to claim 12, wherein the first signal connector is provided on a side surface of the first chip carrier, the second signal connector is provided on a surface of the second chip carrier facing the fluid tank, and the third signal connector is provided on a surface of the first chip carrier facing the fluid tank so as to mate with the second signal connector.

14. The detection module according to claim 12, wherein at least one of the first signal connector, the second signal connector or the third signal connector comprises a plug connector, a socket connector, a conductive probe, a conductive contact sheet or a conductive contact point.

15. The detection module according to any one of claims 8 to 14, wherein at least one of the first chip carrier or the second chip carrier comprises: a circuit board electrically connected to a corresponding sensor chip mounted thereon, or a substrate having wiring electrically connected to a corresponding sensor chip mounted thereon.

16. A method of performing a biochemical analysis on a target sample using a detection system comprising the detection module of any one of claims 1 to 15, comprising:
introducing the carrier reagent carrying the target sample into the fluid channel;
allowing the target sample in the carrier reagent introduced into the fluid channel to be loaded onto sensor chips of the at least two chip carriers, wherein the sensor chips of the at least two chip carriers are exposed to the same fluid channel; and
measuring, by using the sensor chips, a characteristic related to the target sample loaded onto the sensor chips to generate characteristic data, in response to a loading and/or biochemical reaction of the target sample.

17. The method according to claim 16, wherein the biochemical analysis comprises a sequence detection of the target sample.

18. The method according to claim 17, wherein the sequence detection comprises gene sequencing or protein sequencing.

19. The method according to claim 16, wherein the characteristic data is generated by a sensor element of the sensor chip sensing a fluorescent signal or an electrical signal, and the fluorescent signal or the electrical signal is generated in response to a loading and/or biochemical reaction of the target sample on the sensor element.

20. The method according to any one of claims 16 to 19, further comprising:
transmitting the characteristic data to a data processor of the detection system via a signal connector on the chip carrier or the sensor chip; and
analyzing and determining a biochemical characteristic of the detected target sample by the data processor based on the characteristic data.
